# FASCICULE DE BREVET EUROPEEN

(11) **EP 1 941 802 B1**
(45) Date de publication et mention de la délivrance du brevet: **25.02.2009**
(21) Numéro de dépôt: 07291430.2
(22) Date de dépôt: 30.11.2007
(51) Int. Cl.: A23B 7/154, A23B 7/157, A23B 7/158, A23L 3/3553, A23L 3/3589

(54) **Nouveau procédé de traitement de fruits ou de légumes par l'ion phosphoreux et les compositions correspondantes**
Neues Behandlungsverfahren für Obst oder Gemüse mithilfe von Phosphorionen und entsprechende Zusammensetzungen
New method for treating fruit or vegetables using phosphorous ions and corresponding compositions

(30) Priorité: 07.12.2006 FR 0610688
(43) Date de publication de la demande: 09.07.2008
(60) Demande divisionnaire: 08103850.7
(73) Titulaire: XEDA INTERNATIONAL, 13670 Saint-Andiol (FR)
(72) Inventeur: Sardo, Alberto, 13160 Chateaurenard (FR)
(74) Mandataire: Colombet, Alain André

(56) Documents cités:
- EP-A- 1 033 077
- WO-A-00/04793
- WO-A-03/007723
- ES-A1- 2 078 180
- FR-A1- 2 596 728
- GB-A- 2 315 397
- US-A- 4 676 152
- US-A- 5 997 910
- US-B1- 6 338 860

## Description

La présente invention concerne un procédé de traitement de fruits ou de légumes. En effet, il importe que les fruits et légumes ne perdent pas leur qualité organoleptique et conservent un aspect engageant lors de leur mise sur le marché pour une consommation rapide. Or, après leur récolte, les fruits et légumes sont couramment stockés pendant des périodes relativement longues avant d'être mis sur le marché. Les phénomènes susceptibles d'altérer l'aspect et le goût des fruits et légumes sont notamment la prolifération de champignons et de bactéries à leur surface. Ces détériorations sont encore plus rapides au niveau des micro-blessures et des entailles apparaissant sur la peau au cours du stockage ou de la manipulation des fruits et légumes. Un autre phénomène susceptible d'endommager les fruits et légumes est le phénomène d'échaudure qui se manifeste par un noircissement de la peau des fruits et légumes touchés.

WO 03/007723 (revendiquant la priorité du FR 0109627) décrit un procédé de traitement des fruits et légumes par application d'une composition comprenant au moins un principe actif choisi parmi l'eugénol, l'isoeugénol ou un de leurs sels, ladite composition présentant une température comprise entre 40° et 60°C.

US 5,997,910 et US 6,338,860 décrivent l'utilisation de phosphonate comme fongicide.

US 2,078,180 fait référence à un fongicide comprenant de l'imazalyl et un composé phosphoreux.

L'acide phosphonique (H-P0₃H₂) (AP) est aussi appelé acide phosphoreux (H₃P0₃). Ce composé a une activité fongicide similaire à celle du Fosetyl Al (éthylphosphonate d'aluminium). Ce composé, en effet, se dégrade en quelques heures dans les tissus des plantes en AP.

L'activité de l'AP est surtout connue sur les mildious (phycomycètes). En revanche, en ce qui concerne les ascomycètes et les champignons imparfaits parasites des fruits et légumes (*Fusarium spp., Botrytis sp., Phlyctema sp., Penicillium spp.,* etc.), l'AP a peu d'efficacité.

Des tentatives ont cependant été faites d'appliquer l'AP (ou le Fosetyl Al) en post-récolte. En effet, les limites maximales de résidu autorisées (LMR) (exprimés en AP) après traitement de culture sont proches de 50 ppm : on pourrait donc traiter en post- récolte avec des doses relativement élevées. A titre de comparaison, la LMR du Pyriméthanil est seulement (pour le moment) de 0,3 ppm.

Malheureusement, à température ambiante, notamment sur les *Penicilliums,* l'activité est très faible même à des doses de traitement proches de 10 000 ppm dans le cas des *Penicilliums* d'oranges.

De façon inattendue, les présents inventeurs ont combiné l'AP avec la thermothérapie, c'est-à-dire un traitement à l'eau chaude avec une température voisine de 50°C. Contre toute attente, les résultats ont été excellents en ce qu'ils démontrent une potentialisation de l'activité de l'AP.

Généralement, l'efficacité obtenue avec des doses réduites, jusqu'à 1/5 de la dose d'AP utilisée à température ambiante, est équivalente sinon supérieure. Globalement, les quantités de résidus sont diminuées.

La présente invention concerne donc un procédé de traitement de fruits ou de légumes avec **un composé permettant la libération de l'ion phosphite H₂PO₃⁻** à chaud. Le présent procédé présente une synergie d'efficacité, notamment avec des doses **de composé permettant la libération de l'ion phosphite H₂PO₃⁻** inférieures à 10 000 ppm. Cette synergie est particulièrement observée sur les *Penicilliums.* Le procédé selon l'invention convient donc particulièrement au traitement post-récolte.

Selon un premier aspect, la présente invention concerne donc un procédé de traitement de fruits ou de légumes comprenant l'application d'une composition traitante à base **d'un composé permettant la libération de l'ion phosphite H₂PO₃⁻,** à chaud, de préférence à température comprise entre 30° et 60°C, préférentiellement entre 40° et 60°C et encore plus préférentiellement entre 45° et 55°C, notamment entre 48° et 52°C, par exemple 50°C.

Selon un autre aspect préféré, le temps de contact de fruits ou de légumes avec la solution de traitement est compris entre 10 secondes et 10 minutes.

L'application de la composition traitante peut être effectuée par tout moyen connu en soi, notamment par aspersion ou immersion des fruits ou légumes, dans la solution de traitement maintenue à la température désirée ; les fruits et légumes peuvent être ainsi traités lorsqu'ils sont stockés en caisses ou palettes, ou encore hors caisse ou palette, avant leur commercialisation, comme c'est le cas pour les oranges par exemple.

Plus préférentiellement, lorsque les fruits et légumes en caisses ou palettes sont traités par immersion, la composition traitante peut être appliquée au moyen d'un dispositif tel que décrit dans la demande FR 01 096 27. Ce dispositif est particulièrement avantageux en ce qu'il permet l'application homogène de la solution chaude sur les fruits et légumes stockés sur palette ou caisse.

Généralement, les fruits et légumes sont stockés dans des caisses/palettes fermées par des couvercles. Les fonds, les parois latérales et les couvercles de ces caisses/palettes sont ajourés pour permettre à la composition traitante de baigner les fruits ou légumes à traiter.

Lorsque les fruits ou légumes contenus dans une caisse/palette sont complètement immergés, ils s'accumulent soit au fond de la caisse/palette, si leur densité est supérieure à celle de la composition aqueuse traitante, soit sous le couvercle de la caisse/palette, si leur densité est inférieure à celle de la composition aqueuse traitante. Quoiqu'il en soit, on constate, à l'issue du procédé de traitement, que les points de contact entre les fruits et légumes n'ont pas été traités.

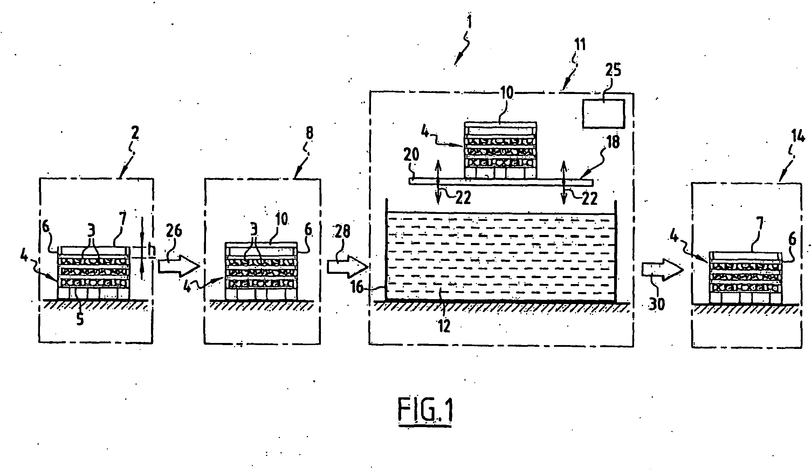

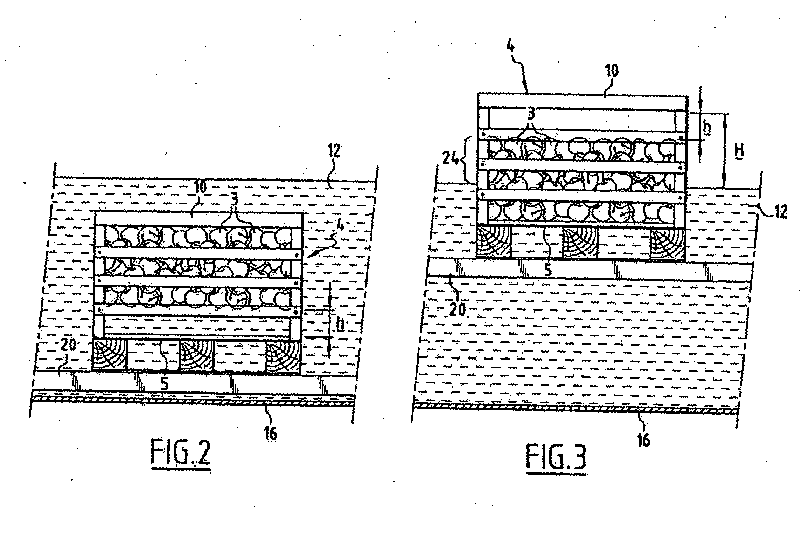

La demande FR 01 09 627 résout ce problème en fournissant un procédé qui permet de traiter de manière plus homogène la surface des fruits ou légumes. Ce procédé, incorporé ici par référence, est décrit plus précisément ci-après et dans les figures 1 à 3.

Il comprend les étapes consistant à :
- fournir un bain d'une composition traitante (12),
- placer les fruits ou légumes (3) dans des moyens (4) de retenue,
- abaisser les moyens (4) de retenue pour immerger complètement les fruits ou légumes (3) dans le bain,
- soulever les moyens (4) de retenue pour retirer complètement les fruits ou légumes du bain,
   et, après immersion complète des fruits ou légumes (3) et avant leur retrait du bain, les étapes intermédiaires consistant à :
- soulever les moyens (4) de retenue pour qu'au moins une partie des fruits ou légumes (3) qui y sont contenus émergent du bain, et
- abaisser les moyens (4) de retenue pour immerger à nouveau complètement les fruits ou légumes (3) qu'ils contiennent dans le bain.

De préférence, les étapes intermédiaires sont reproduites suivant un cycle de période comprise entre 2 secondes et 2 minutes.

Ce procédé convient particulièrement pour la mise en oeuvre du procédé de traitement de fruits ou de légumes avec **un composé permettant la libération de l'ion phosphite H₂PO₃⁻,** à titre de composition traitante (12), à chaud, de préférence à température comprise entre 30° et 60°C, préférentiellement entre 40° et 60°C et encore plus préférentiellement entre 45° et 55°C, notamment entre 48° et 52°C, par exemple 50°C selon l'invention.

Selon un autre aspect préféré, la densité de la composition traitante est supérieure à celle des fruits ou légumes à traiter et en ce que, lors de l'étape intermédiaire de soulèvement des moyens (4) de retenue, le poids des fruits ou légumes (3) émergés est supérieur à la poussée d'Archimède s'exerçant sur les fruits ou légumes (3) encore immergés.

Ainsi, la composition traitante (12) peut comprendre en outre un agent d'augmentation de sa densité, tel que un silicate de métal alcalin, un phosphate de métal alcalin, un bicarbonate de métal alcalin, un carbonate de métal alcalin ou un sulfonate de métal alcalin. On préfère notamment un phosphate de potassium tel que le pyrophosphate de potassium ou le métaphosphate de potassium.

Avantageusement, selon l'invention, le temps total d'immersion complète des fruits ou légumes (3) dans la composition traitante est inférieur à 10 minutes.

Selon un autre objet, la présente invention concerne également le kit permettant l'application de la composition traitante selon l'invention aux fruits et légumes. Ledit kit comprend l'installation décrite dans la demande FR 01 09 627 avec la composition traitante selon la présente invention à base **d'un composé permettant la libération de l'ion phosphite H₂PO₃⁻.**

Le kit selon l'invention comprend donc :
i) une installation comprenant :
   - des moyens de conditionnement des fruits ou légumes dans des moyens (4) de retenue,
   - des moyens (16) de formation d'un bain d'une composition traitante (12),
   - des moyens (18) d'abaissement et de soulèvement des moyens (4) de retenue, et
   - une unité de commande des moyens (18) d'abaissement et de soulèvement adaptée, d'une part, pour commander des étapes consistant à :
   - abaisser les moyens (4) de retenue pour immerger complètement les fruits ou légumes (3) qui y sont contenus dans le bain, et
   - soulever les moyens (4) de retenue pour retirer complètement les fruits ou légumes (3) du bain, et d'autre part pour commander entre ces deux étapes des étapes intermédiaires consistant à :
   - soulever les moyens (4) de retenue pour qu'au moins une partie des fruits ou légumes (3) qui y sont contenus émergent du bain, et
   - abaisser les moyens (4) de retenue pour immerger à nouveau complètement les fruits ou légumes (3) qu'ils contiennent dans le bain ;
   et
ii) une composition traitante (12) à base **d'un composé permettant la libération de l'ion phosphite H₂PO₃⁻,** ladite composition traitante présentant une température comprise entre 30° et 60°C, préférentiellement entre 40° et 60°C et encore plus préférentiellement entre 45° et 55°C, notamment entre 48° et 52°C, par exemple 50°C selon l'invention.

Selon un autre aspect avantageux, lorsque les fruits et légumes stockés en caisse ou palettes sont traités par aspersion, on opère selon le procédé suivant comprenant les étapes consistant à :
- réunir des moyens de conditionnement contenant les fruits ou légumes en un bloc sensiblement compact dans un logement délimité par une ceinture de parois latérales à l'intérieur d'une enceinte, les parois latérales s'étendant selon une direction longitudinale, au moins une des parois latérales étant déformable entre une configuration d'engagement et une configuration de libération du bloc,
- amener la ou chaque paroi latérale déformable dans sa configuration d'engagement du bloc, et
- faire traverser le logement longitudinalement par une composition traitante ayant une température comprise entre 30°C et 60°C, avec un débit compris entre 20 et 150m³/m²/h et pendant une durée comprise entre 10s et 10mn.

Préférentiellement, le débit est compris entre 50 et 100 m³/m²/h et la durée comprise entre 1 et 5mn.

Le kit correspondant pour la mise en oeuvre de ce procédé comprenant :
- une enceinte comprenant une ceinture de parois latérales s'étendant selon une direction longitudinale, la ceinture délimitant à l'intérieur de l'enceinte un logement de réception des fruits ou de légumes à traiter, au moins une des parois latérales étant déformable entre une configuration d'engagement et une configuration de libération d'un chargement disposé à l'intérieur du logement,
- un dispositif d'alimentation de l'enceinte en composition traitante et d'évacuation de composition traitante hors de l'enceinte,
- des moyens de chauffage de la composition traitante, et
- un système de déformation des parois déformables.
   et
ii) une composition traitante à base **d'un composé permettant la libération de l'ion phosphite H₂PO₃⁻,** ladite composition traitante présentant une température comprise entre 30° et 60°C, préférentiellement entre 40° et 60°C et encore plus préférentiellement entre 45° et 55°C, notamment entre 48° et 52°C, par exemple 50°C selon l'invention, fait donc également partie de la présente invention.

De préférence, les dites parois sont des parois gonflables.

Selon un autre aspect avantageux, les concentrations **du composé permettant la libération de l'ion phosphite H₂PO₃⁻** dans la composition traitante sont comprises entre 200 ppm et 10 000 ppm, de préférence entre 500 ppm et 5000 ppm, plus préférentiellement entre 2000 et 4000 ppm.

La quantité de produit appliqué dépend de la quantité de fruits et légumes à traiter, ainsi que des conditions de stockage et le degré de maturité des fruits et légumes stockés et/ou souhaité. En général, on applique entre 3000 et 10000 litres de composition traitante aux concentrations indiquées ci-dessus, pour 100-300 tonnes de fruits et légumes à traiter.

Selon un autre aspect avantageux, la composition traitante selon l'invention comprend, outre **le composé permettant la libération de l'ion phosphite H₂PO₃⁻,** un autre fongicide. Préférentiellement, ledit fongicide est choisi parmi tout fongicide habituellement utilisé pour le traitement de fruits ou de légumes, notamment les fongicides appliqués en post-récolte. On peut notamment mentionner l'eugénol, l'isoeugénol ou l'un de leurs sels, le thiabendazole (TBZ), l'orthophénylphénol, l'imazalil ou le phosphite d'imazalil.

Les combinaisons comprenant **un composé permettant la libération de l'ion phosphite H₂PO₃⁻** avec ledit fongicide habituellement utilisé pour le traitement de fruits ou de légumes font également partie de la présente invention. De préférence, le fongicide est choisi parmi l'eugénol, l'isoeugénol ou l'un de leurs sels, le TBZ, l'orthophénylphénol, l'imazalil ou le phosphite d'imazalil ; on préfère notamment l'eugénol, un sel de l'eugénol acceptable sur le plan alimentaire, l'isoeugénol, un sel de l'isoeugénol acceptable sur le plan alimentaire, et leurs mélanges.

Les combinaisons selon l'invention convienent particulièrement à une application à chaud, c'est-à-dire à température comprise entre 3 et 60°C, préférentiellement entre 40° et 60°C et encore plus préférentiellement entre 45° et 55°C, notamment entre 48° et 52°C, par exemple 50°C selon l'invention.

Selon un aspect préféré, le fongicide est présent aux concentrations normalement utilisées. Ainsi, l'eugénol peut être utilisé à des concentrations comprises entre 300 et 4500 ppm, l'imazalil à des concentrations comprises entre 100 et 1000 ppm, l'orthophénylphénol à des concentrations comprises entre 500 et 3000ppm, le TBZ à des concentrations comprises entre 100 et 1000ppm.

**Le composé permettant la libération de l'ion phosphite H₂PO₃⁻** et le fongicide peuvent être appliqués simultanément ou séparément ou de façon séquencée dans le temps.

Les compositions traitantes et les combinaisons selon l'invention appliquées à chaud montrent des résultats synergiques sur un large spectre de souches, notamment les souches caractéristiques apparaissant en post-récolte, en particulier les *Penicilliums.* Par ailleurs, les combinaisons selon l'invention démontrent une activité significative sur des souches résistantes à l'acide.

Selon l'invention, on entend par "acide phosphoreux" (ou "acide phosphonique" ou "phosphite") tout composé permettant la libération de l'ion phosphite H₂PO₃⁻. On peut ainsi citer l'acide phosphonique (ou HPO₃H₂), l'acide phosphoreux (H₃PO₃) ou encore le phosphite de potassium, phosphite de sodium, phosphite d'ammonium ou phosphite de magnésium.

Selon l'invention, l'expression "composition traitante" désigne une composition comprenant **un composé permettant la libération de l'ion phosphite H₂PO₃⁻**. Généralement, la composition traitante est une solution aqueuse.

Les compositions traitantes peuvent également contenir, en sus, un fongicide dans le cadre des combinaisons selon l'invention.

Les compositions traitantes peuvent également comprendre tout additif habituellement utilisé, notamment pour le traitement de fruits ou de légumes.

### Figures

La figure 1 est une vue schématique latérale d'une installation de traitement de fruits ou légumes selon l'invention ;
Les figures 2 et 3 sont des vues partielles, schématiques, latérales et agrandies, illustrant deux étapes intermédiaires successives du procédé mis en oeuvre par l'installation de la figure 1.

Les exemples suivants sont donnés à titre illustratif et non limitatif de la présente invention.

### 1 - Etude in vitro de l'activité de l'acide phosphonique sur le P. expansum

Comme le montre le tableau 1, l'activité de l'AP à température ambiante est partielle même à 4000 ppm.

La combinaison avec la thermothérapie renforce considérablement l'efficacité, même à 1000 ppm.

**Tableau 1 : Efficacité de l'AP (sous forme de « Kphos ») sur la germination des spores du P. expansum (22°C)**

| Traitement | Spores germées | |
|---|---|---|
| | 24 heures | 48 heures |
| Contrôle | 100 a | 100 a |
| Contrôle 50°C, 2min | 85 a | 93 a |
| Ac. Phosphonique 1000 ppm | 27 b | 34 b |
| Ac. Phosphonique 4000 ppm | 11 c | 11 c |
| Ac. Phosphonique 1000 ppm 50° 2 min | 0 d | 21 c |
| Ac. Phosphonique 4000 ppm 50° 2 min | 0 d | 0 c |
| Les valeurs suivies d'une même lettre ne sont pas statistiquement différentes (test Student P =0.05) | | |

| | | |
|---|---|---|
| Kphos = acide phosphonique neutralisé par KOH (pH 6.5). | | |

### 2 - Etude in vivo de l'activité de l'acide phosphonique (Kphos) sur des infections de P. expansum sur pommes

**Tableau 2 : Efficacité de l'AP (sous forme de « Kphos ») sur l'évolution des infections naturelles causées par P. expansum sur pommes Elstar biologiques (2°C)**

| * nombre de jours après le traitement | % pommes avec symptômes | | | |
|---|---|---|---|---|
| | 2001 - 2002 * | | 2002 - 2003* | |
| Traitement | 90 jours | 180 jours | 90 jours | 180 jours |
| Contrôle | 4.6 a | 15.6 a | 6.0 a | 16.5 a |
| Contrôle 50°C 2min | 4.2 a | 15.3 a | 5.6 a | 15.5 a |
| AP 1000 ppm | 3.1 a | 13.1 a | 4.9 a | 11.1 a |
| AP 1000 ppm - 50 °C 2 min | 0.0 b | 4.7 b | 0.0 b | 6.3 c |
| Références chimiques | | | | |
| Pyriméthanil 250 ppm | 4.1 a | 16.2 a | 4.0 a | 19.0 a |
| Pyriméthanil 500 ppm | 3.2 a | 21.3 a | 0.0 a | 14.0 a |
| Fluidoxonil 200 ppm | 1.1 b | 4.9 b | 4.0 a | 7.0 c |
| Traitements effectués après 26 jours de conservation à 2°C | | | | |

Dans cette expérimentation, étant donné la faible activité *in vitro* de l'AP à température ambiante sur *P. expansum,* il n'est pas surprenant de retrouver le même phénomène *in vivo,* soit une activité proche de 0.

En revanche, en combinaison avec la thermothérapie, l'efficacité est comparable voire supérieure à celle des meilleurs fongicides synthétiques actuellement disponibles.

### 3 - Efficacité de l'AP et de la thermothérapie sur les infections à P. digitatum sur oranges

**Tableau 3 : Activité de l'AP en combinaison avec le Bioxeda et la thermothérapie sur oranges Navel**

| Traitements | Oranges avec symptômes | |
|---|---|---|
| | 9 jours | 18 jours |
| Contrôle | 95% a | 100 % a |
| Contrôle 48°C 2 min | 45% b | 83% b |
| Bioxeda (1) 48°C 2 min | 4 % b | 60 % b |
| Bioxeda + AP (2) 48°C 2 min | 0 % b | 26 % c |

| | | |
|---|---|---|
| 1- Bioxeda, matière active : eugénol 1,8 g/L 2- AP 1000 ppm (« Kphos ») | | |

Dans cette expérimentation, les oranges ont été blessées puis inoculées par le *P. Digitatum* (500 000 sp/mL) et traitées 15 heures plus tard ; la conservation s'effectue à 5°C.

On remarque l'effet complémentaire de l'AP à 9 jours et surtout à 18 jours, où le taux de pourritures est divisé par 2,3 en présence de l'AP (26 % au Bioxeda 60 % et 100 % dans le témoin).

### 4 - Efficacité de l'AP sur les infections à P. digitatum sur oranges. Comparaison avec un mélange de trois fongicides. Tous les traitements sont combinés à la thermothérapie

**Tableau 4 : Efficacité de l'AP combiné avec la thermothérapie sur P. digitatum (orange Navel). Comparaison.**

| Traitements | Nombre de fruits | Oranges avec symptômes 12 J 5°C + 3 J SPC (1) |
|---|---|---|
| Contrôle | 200 | 9,0 a |
| Thermothérapie | 300 | 1.0 b |
| + Imazalil 400 ppm | | |
| + TBZ 450 ppm | | |
| + OPP 1500 ppm | | |
| Thermothérapie + acide phosphonique 2000 ppm | 200 | 0.5 b |

| | | |
|---|---|---|
| (1) SPC: Simulation de période de commercialisation soit 3 jours à température ambiante. TBZ : thiabendazole OPP : orthophénylphénol. | | |

Comme le montre le tableau 4 cette fois sur infections naturelles, l'AP se montre supérieur ou équivalent au traitement appliqué avec trois fongicides habituellement utilisés dans le cas des pourritures à *Penicillium* sur oranges.

### 5 - Efficacité de l'AP sur les infections naturelles à P. digitatum sur oranges, combiné avec la thermothérapie

Une nouvelle expérimentation réalisée dans les conditions très proches de la pratique a été réalisée : infections naturelles, conservation au froid, simulation de périodes de conservation (SPC).

**Tableau 5 : Efficacité de l'acide phosphonique combiné à la thermothérapie sur P. digitatum des oranges (Navel).**

| Traitements | Nombre de fruits | % d'oranges avec symptômes 15 J 5°C + 5J SPC |
|---|---|---|
| Témoin | 600 | 10.2 % |
| Thermothérapie 50°C 3 min | 400 | 6.5 % |
| AP 2000 ppm | 400 | 6.0% |
| AP 4000 ppm | 400 | 5.1 % |
| Thermothérapie + AP 2000 ppm | 300 | 4.0 % |
| Thermothérapie + AP 4000 ppm | 300 | 2.7 % |

Le tableau montre une excellente efficacité de l'AP, notamment à 4000 ppm combiné à la thermothérapie (73,5%). Aucun phénomène de phytotoxicité n'a été trouvé, ce qui laisse supposer qu'une augmentation de la concentration, donc de l'efficacité, est encore possible. Avec une solution résiduelle sur les fruits de 1,5 l/tonne à 4000 ppm soit 6 g/tonne, le taux de résidus théorique, environ 6 ppm serait très faible pour cette molécule. La LMR étant de 50 ppm on pourra envisager une augmentation de la dose si nécessaire.

### Conclusion :

Ces différentes expérimentations montrent que la thermothérapie potentialise de façon synergique l'effet fongicide de l'AP. On notera que les fongicides actuellement utilisés génèrent des souches dotées d'un haut niveau de résistance qui conduit à l'impuissance face aux infections (cas du thiabendazole, du carbendazime et de l'imazalil principalement). Or, il n'y a pas de phénomène de résistance acquise à l'AP.

### 6 - Activité des combinaisons selon l'invention

### 6.1. AP/eugénol

Des oranges Washington inoculées au *Penicillium digitatum* ont été mises en contact avec une solution d'eugénol/phosphite de potassium contenant 1100 ppm d'eugénol et 1600 ppm de phosphite de potassium pendant un temps de contact de 2 minutes, à 38° et 48°C. Les fruits traités ont été maintenus à 7°C puis examinés après 9 et 18 jours. Ils ont été comparés avec des fruits traités avec l'eugénol seul aux mêmes conditions et des fruits inoculés non traités.

Le tableau ci-après indique les pourcentages de fruits pourris :

| | Après 9 jours | Après 18 jours |
|---|---|---|
| 38°C Témoin | 95 | 100 |
| 48°C Témoin | 68 | 90 |
| 38°C Eugénol | 12 | 73 |
| 48°C Eugénol | 4 | 60 |
| 38°C Phosphite de potassium | 14 | 76 |
| 48°C Phosphite de potassium | 3 | 44 |
| 38°C Eugénol / Phosphite de Potassium | 11 | 68 |
| 48°C Eugénol / Phosphite de Potassium | 0 | 26 |

Ces résultats montrent qu'il y a un effet certain de l'augmentation de la température sur l'activité de l'eugénol et surtout que cette activité progresse fortement en présence du phosphite aux mêmes doses et temps de contact.

### 6.2. AP/Imazalil

Des oranges Valencia inoculées avec une souche de *Penicillium digitatum* résistante à l'Imazalil ont été traitées à 52°C avec un temps de contact de 2 minutes avec :
- 300 ppm Imazalil ;
- 3000 ppm phosphite de potassium ;
- les deux produits mélangés à 300 ppm Imazalil et 3000 ppm phosphite de potassium.

Les résultats sont illustrés dans le tableau suivant :

| Traitements | N° d' essai | Nombre de fruits | | % de fruits pourris | % moyen de fruits pourris |
|---|---|---|---|---|---|
| | | pourris | intacts | | |
| Inoculés | 1 | 10 | 0 | 100 | **100** |
| | 2 | 10 | 0 | 100 | |
| | 3 | 10 | 0 | 100 | |
| | 4 | 10 | 0 | 100 | |
| Témoin 52°C | 1 | 7 | 3 | 70 | **85** |
| | 2 | 9 | 1 | 90 | |
| | 3 | 9 | 1 | 90 | |
| | 4 | 7 | 3 | 70 | |
| Phosphite de potassium 52°C | 1 | 5 | 5 | 50 | **42,5** |
| | 2 | 6 | 4 | 60 | |
| | 3 | 3 | 7 | 30 | |
| | 4 | 3 | 7 | 30 | |
| Imazalil 52°C | 1 | 2 | 8 | 20 | **42,5** |
| | 2 | 7 | 3 | 70 | |
| | 3 | 3 | 7 | 30 | |
| | 4 | 5 | 5 | 50 | |
| Phosphite de calcium + Imazalil 52°C | 1 | 2 | 8 | 20 | **10** |
| | 2 | 2 | 8 | 20 | |
| | 3 | 0 | 10 | 0 | |
| | 4 | 0 | 10 | 0 | |

Comme il apparaît du tableau ci-dessus, chaque produit appliqué individuellement divise par 2 le taux de pourriture (42,5% contre 85%), tandis que la combinaison des deux produits divise le taux de pourriture par 8,5.

Ces résultats démontrent nettement l'effet synergique des combinaisons selon l'invention.

## Revendications

1. Procédé de traitement de fruits ou de légumes comprenant l'application d'une composition traitante à base **d'un composé permettant la libération de l'ion phosphite H₂PO₃⁻** présentant une température comprise entre 30° et 60°C.

2. Procédé selon la revendication 1 tel que la composition comprend en outre un fongicide.

3. Procédé selon la revendication 2 tel que le fongicide est choisi parmi l'eugénol, l'isoeugénol ou l'un de leurs sels, le thiabendazole, l'orthophénylphénol, l'imazalil ou le phosphite d'imazalil.

4. Procédé selon l'une quelconque des revendications 2 ou 3 tel que **ledit composé permettant la libération de l'ion phosphite H₂PO₃⁻** et le fongicide sont appliqués simultanément, séparément ou de façon séquencée dans le temps.

5. Procédé selon l'une quelconque des revendications précédentes tel que la composition traitante présente une température comprise entre 40° et 60°C.

6. Procédé selon l'une quelconque des revendications précédentes tel que la composition traitante présente une température comprise 45° et 55°C.

7. Procédé selon l'une quelconque des revendications précédentes tel que le temps de contact de fruits ou de légumes avec la composition traitante est compris entre 10 secondes et 10 minutes.

8. Procédé selon l'une quelconque des revendications précédentes tel que les concentrations **dudit composé permettant la libération de l'ion phosphite H₂PO₃⁻** dans la composition traitante sont comprises entre 200 ppm et 10 000 ppm.

9. Procédé selon l'une quelconque des revendications précédentes tel que les concentrations **dudit composé permettant la libération de l'ion phosphite H₂PO₃⁻** dans la composition traitante sont comprises entre 500 ppm et 5000 ppm.

10. Procédé selon l'une quelconque des revendications précédentes tel que les concentrations **dudit composé permettant la libération de l'ion phosphite H₂PO₃⁻** dans la composition traitante sont comprises entre 2000 et 4000 ppm.

11. Procédé selon l'une quelconque des revendications précédentes tel que la composition traitante est appliquée à raison de 3000 à 10000 litres de composition traitante pour 100 à 300 tonne de fruits et légumes à traiter.

12. Procédé selon l'une quelconque des revendications précédentes tel que l'application de la composition traitante est effectuée sur les fruits et légumes stockés en caisse/palette ou hors caisse/palette.

13. Procédé selon l'une quelconque des revendications précédentes tel que la composition traitante est appliquée par aspersion ou immersion.

14. Procédé selon l'une quelconque des revendications précédentes comprenant les étapes consistant à :
- fournir un bain d'une composition traitante (12) à base **d'un composé permettant la libération de l'ion phosphite H₂PO₃⁻** présentant une température comprise entre 30° et 60°C selon l'une quelconque des revendications 1 à 10 ou 17 à 19,
- placer les fruits ou légumes (3) dans des moyens (4) de retenue,
- abaisser les moyens (4) de retenue pour immerger complètement les fruits ou légumes (3) dans le bain,
- soulever les moyens (4) de retenue pour retirer complètement les fruits ou légumes du bain,
et, après immersion complète des fruits ou légumes (3) et avant leur retrait du bain, les étapes intermédiaires consistant à :
- soulever les moyens (4) de retenue pour qu'au moins une partie des fruits ou légumes (3) qui y sont contenus émergent du bain, et
- abaisser les moyens (4) de retenue pour immerger à nouveau complètement les fruits ou légumes (3) qu'ils contiennent dans le bain.

15. Procédé selon la revendication 13 ou 14 tel que le temps total d'immersion complète des fruits ou légumes (3) dans la composition traitante est inférieur à 10 minutes.

16. Procédé selon l'une quelconque des revendications 1 à 13 tel que la composition traitante est appliquée par le procédé comprenant les étapes consistant à :
- réunir des moyens de conditionnement contenant les fruits ou légumes en un bloc sensiblement compact dans un logement délimité par une ceinture de parois latérales à l'intérieur d'une enceinte, les parois latérales s'étendant selon une direction longitudinale, au moins une des parois latérales étant déformable entre une configuration d'engagement et une configuration de libération du bloc,
- amener la ou chaque paroi latérale déformable dans sa configuration d'engagement du bloc, et
- faire traverser le logement longitudinalement par une composition traitante ayant une température comprise entre 30°C et 60°C, avec un débit compris entre 20 et 150m³/m²/h et pendant une durée comprise entre 10s et 10mn.

17. Combinaison comprenant **un composé permettant la libération de l'ion phosphite H₂PO₃⁻** et un fongicide, présentant une température comprise entre 30° et 60°C.

18. Combinaison selon la revendication 17 tel que le fongicide est choisi parmi l'eugénol, l'isoeugénol ou l'un de leurs sels, le thiabendazole, l'orthophénylphénol, l'imazalil ou le phosphite d'imazalil.

19. Combinaison selon l'une quelconque des revendications 17 ou 18 tel que **ledit composé permettant la libération de l'ion phosphite H₂PO₃⁻** et le fongicide sont appliqués simultanément, séparément ou de façon séquencée dans le temps.

20. Kit comprenant :
i) une installation comprenant :
- des moyens de conditionnement des fruits ou légumes dans des moyens (4) de retenue,
- des moyens (16) de formation d'un bain d'une composition traitante (12) **d'un composé permettant la libération de l'ion phosphite H₂PO₃⁻** présentant une température comprise entre 30° et 60°C selon l'une quelconque des revendications 1 à 10 ou 17 à 19,
- des moyens (18) d'abaissement et de soulèvement des moyens (4) de retenue, et
- une unité de commande des moyens (18) d'abaissement et de soulèvement adaptée, d'une part, pour commander des étapes consistant à :
- abaisser les moyens (4) de retenue pour immerger complètement les fruits ou légumes (3) qui y sont contenus dans le bain, et
- soulever les moyens (4) de retenue pour retirer complètement les fruits ou légumes (3) du bain, et d'autre part pour commander entre ces deux étapes des étapes intermédiaires consistant à :
- soulever les moyens (4) de retenue pour qu'au moins une partie des fruits ou légumes (3) qui y sont contenus émergent du bain, et
- abaisser les moyens (4) de retenue pour immerger à nouveau complètement les fruits ou légumes (3) qu'ils contiennent dans le bain ;
et
ii) une composition traitante (12) **d'un composé permettant la libération de l'ion phosphite H₂PO₃⁻** présentant une température comprise entre 30° et 60°C telle que définie selon l'une quelconque des revendications 1 à 10 ou 17 à 19.

21. Kit comprenant :
i) une installation comprenant :
- une enceinte comprenant une ceinture de parois latérales s'étendant selon une direction longitudinale, la ceinture délimitant à l'intérieur de l'enceinte un logement de réception des fruits ou de légumes à traiter, au moins une des parois latérales étant déformable entre une configuration d'engagement et une configuration de libération d'un chargement disposé à l'intérieur du logement,
- un dispositif d'alimentation de l'enceinte en composition traitante et d'évacuation de composition traitante hors de l'enceinte,
- des moyens de chauffage de la composition traitante, et
- un système de déformation des parois déformables.
et
ii) une composition traitante à base **d'un composé permettant la libération de l'ion phosphite H₂PO₃⁻,** ladite composition traitante présentant une température comprise entre 30° et 60°C selon l'une quelconque des revendications 1 à 10 ou 17 à 20.

## Claims

1. A method of treating fruit or vegetables comprising the application of a treatment composition based on a compound allowing release of the phosphite ion H₂PO₃⁻ and having a temperature of between 30° and 60°C.

2. A method according to claim 1, such that the composition further comprises a fungicide.

3. A method according to claim 2, such that the fungicide is selected from among eugenol, isoeugenol or one of the salts thereof, thiabendazole, orthophenylphenol, imazalil or imazalil phosphite.

4. A method according to either one of claims 2 or 3, such that said compound allowing release of the phosphite ion H₂PO₃⁻ and the fungicide are applied simultaneously, separately or sequenced over time.

5. A method according to any one of the preceding claims, such that the treatment composition has a temperature of between 40° and 60°C.

6. A method according to any one of the preceding claims, such that the treatment composition has a temperature of between 45° and 55°C.

7. A method according to any one of the preceding claims, such that the fruit or vegetables are in contact with the treatment composition for between 10 seconds and 10 minutes.

8. A method according to any one of the preceding claims, such that the concentrations of said compound allowing release of the phosphite ion H₂PO₃⁻ in the treatment composition are between 200 ppm and 10000 ppm.

9. A method according to any one of the preceding claims, such that the concentrations of said compound allowing release of the phosphite ion H₂PO₃⁻ in the treatment composition are between 500 ppm and 5000 ppm.

10. A method according to any one of the preceding claims, such that the concentrations of said compound allowing release of the phosphite ion H₂PO₃⁻ in the treatment composition are between 2000 ppm and 4000 ppm.

11. A method according to any one of the preceding claims, such that the treatment composition is applied at a rate of 3000 to 10000 litres of treatment composition for every 100 to 300 tonnes of fruit and vegetables to be treated.

12. A method according to any one of the preceding claims, such that the treatment composition is applied to fruit and vegetables stored in crates/pallets or outside crates/pallets.

13. A method according to any one of the preceding claims, such that the treatment composition is applied by spraying or immersion.

14. A method according to any one of the preceding claims comprising the following steps:
- providing a bath of a treatment composition (12) based on a compound allowing release of the phosphite ion H₂PO₃⁻ and having a temperature of between 30° and 60°C according to any one of claims 1 to 10 or 17 to 19,
- placing the fruit or vegetables (3) in holding means (4),
- lowering the holding means (4) so as to immerse the fruit or vegetables (3) completely in the bath,
- raising the holding means (4) so as to remove the fruit or vegetables completely from the bath,
and, after complete immersion of the fruit or vegetables (3) and prior to removal thereof from the bath, the following intermediate steps:
- raising the holding means (4) so that the fruit or vegetables (3) contained therein emerge at least in part from the bath, and
- lowering the holding means (4) so as to re-immerse the fruit or vegetables (3) contained therein completely in the bath.

15. A method according to claim 13 or 14, such that the total period for which the fruit or vegetables (3) are immersed completely in the treatment composition is less than 10 minutes.

16. A method according to any one of claims 1 to 13, such that the treatment composition is applied by the method comprising the following steps:
- bringing together packaging means containing the fruit or vegetables in a substantially compact block in a receptacle defined by a belt of lateral walls inside an enclosure, the lateral walls extending in a longitudinal direction, at least one of the lateral walls being deformable between a block engagement configuration and a block release configuration,
- bringing the or each deformable lateral wall into its block engagement configuration, and
- passing a treatment composition having a temperature of between 30°C and 60°C longitudinally through the receptacle at a flow rate of between 20 and 150 m³/m²/h and for a duration of between 10 s and 10 min.

17. A combination comprising a compound allowing release of the phosphite ion H₂PO₃⁻ and a fungicide, having a temperature of between 30° and 60°C.

18. A combination according to claim 17, such that the fungicide is selected from among eugenol, isoeugenol or one of the salts thereof, thiabendazole, orthophenylphenol, imazalil or the imazalil phosphite.

19. A combination according to either one of claims 17 or 18, such that said compound allowing release of the phosphite ion H₂PO₃⁻ and the fungicide are applied simultaneously, separately or sequenced over time.

20. A kit comprising:
i) an installation comprising:
- means of packaging the fruit or vegetables in holding means (4),
- means (16) of forming a bath of a treatment composition (12) of a compound allowing release of the phosphite ion H₂PO₃⁻ having a temperature of between 30° and 60°C according to any one of claims 1 to 10 or 17 to 19,
- means (18) of lowering and of raising the holding means (4), and
- a control unit for the lowering and raising means (18) suitable, on the one hand, for controlling the following steps:
- lowering the holding means (4) so as to immerse the fruits or vegetables (3) contained therein completely in the bath, and
- raising the holding means (4) so as to remove the fruit or vegetables (3) completely from the bath, and on the other hand for controlling between these two steps the following intermediate steps:
- raising the holding means (4) so that the fruit or vegetables (3) contained therein emerge at least in part from the bath, and
- lowering the holding means (4) so as to re-immerse the fruit or vegetables (3) contained therein completely in the bath;
and
ii) a treatment composition (12) of a compound allowing release of the phosphite ion H₂PO₃⁻ having a temperature of between 30° and 60°C according to any one of claims 1 to 10 or 17 to 19.

21. A kit comprising:
i) an installation comprising:
- an enclosure comprising a belt of lateral walls extending in a longitudinal direction, the belt defining inside the enclosure a receptacle for receiving the fruit or vegetables to be treated, at least one of the lateral walls being deformable between a configuration for engaging and a configuration for releasing a load disposed inside the receptacle,
- a device for supplying the enclosure with treatment composition and removing treatment composition from the enclosure,
- means of heating the treatment composition,
and
- a system for deforming the deformable walls, and
ii) a treatment composition based on a compound allowing release of the phosphite ion H₂PO₃⁻, said treatment composition having a temperature of between 30° and 60°C according to any one of claims 1 to 10 or 17 to 20.

## Patentansprüche

1. Verfahren zur Behandlung von Früchten oder Gemüsen, umfassend das Aufbringen einer Behandlungszusammensetzung auf der Grundlage einer Verbindung, welche die Freisetzung von Phosphitionen H₂PO₃⁻ ermöglicht, mit einer Temperatur zwischen 30° und 60°C.

2. Verfahren nach Anspruch 1, worin die Zusammensetzung zusätzlich ein Fungizid umfasst.

3. Verfahren nach Anspruch 2, worin das Fungizid aus Eugenol, Isoeugenol oder einem ihrer Salze, Thiabendazol, Orthophenylphenol, Imazalil oder Imazalilphosphit ausgewählt ist.

4. Verfahren nach einem der Ansprüche 2 oder 3, worin die Verbindung, welche die Freisetzung von Phosphitionen H₂PO₃⁻ ermöglicht und das Fungizid gleichzeitig, getrennt oder zeitlich nacheinander aufgebracht werden.

5. Verfahren nach einem der vorhergehenden Ansprüche, worin die Behandlungszusammensetzung eine Temperatur zwischen 40° und 60°C aufweist.

6. Verfahren nach einem der vorhergehenden Ansprüche, worin die Behandlungszusammensetzung eine Temperatur zwischen 45° und 55°C aufweist.

7. Verfahren nach einem der vorhergehenden Ansprüche, worin die Kontaktzeit der Behandlungszusammensetzung mit den Früchten oder Gemüsen zwischen 10 Sekunden und 10 Minuten beträgt.

8. Verfahren nach einem der vorhergehenden Ansprüche, worin die Konzentration der Verbindung, welche die Freisetzung von Phosphitionen H₂PO₃⁻ ermöglicht, in der Behandlungszusammensetzung zwischen 200 ppm und 10 000 ppm beträgt.

9. Verfahren nach einem der vorhergehenden Ansprüche, worin die Konzentration der Verbindung, welche die Freisetzung von Phosphitionen H₂PO₃⁻ ermöglicht, in der Behandlungszusammensetzung zwischen 500 ppm und 5000 ppm beträgt.

10. Verfahren nach einem der vorhergehenden Ansprüche, worin die Konzentration der Verbindung, welche die Freisetzung von Phosphitionen H₂PO₃⁻ ermöglicht, in der Behandlungszusammensetzung zwischen 2000 und 4000 ppm beträgt.

11. Verfahren nach einem der vorhergehenden Ansprüche, worin die Behandlungszusammensetzung in einer Menge von 3000 bis 10000 Liter Behandlungszusammensetzung pro 100 bis 300 Tonnen zu behandelnder Früchte und Gemüse aufgebracht wird.

12. Verfahren nach einem der vorhergehenden Ansprüche, worin das Aufbringen der Behandlungszusammensetzung auf die Früchte und Gemüse erfolgt, die in Kisten/Palette oder außerhalb Kisten/Palette gelagert sind.

13. Verfahren nach einem der vorhergehenden Ansprüche, worin die Behandlungszusammensetzung durch Aufsprühen oder Tauchen aufgebracht wird.

14. Verfahren nach einem der vorhergehenden Ansprüche, umfassend die folgenden Schritte:
- Bereitstellung eines Bades einer Behandlungszusammensetzung (12) auf der Grundlage einer Verbindung, welche die Freisetzung von Phosphitionen H₂PO₃⁻ ermöglicht, mit einer Temperatur zwischen 30° und 60°C nach einem der Ansprüche 1 bis 10 oder 17 bis 19,
- Einbringen der Früchte oder Gemüse (3) in Behälter (4),
- Absenken der Behälter (4) zum vollständigen Eintauchen der Früchte oder Gemüse (3) in das Bad,
- Anheben der Behälter (4) zum vollständigen Ausbringen der Früchte oder Gemüse aus dem Bad, und
- nach dem vollständigen Eintauchen der Früchte oder Gemüse (3) und vor ihrer Entnahme aus dem Bad die folgenden Zwischenstufen:
- Anheben der Behälter (4), damit mindestens ein Teil der darin enthaltenen Früchte oder Gemüse (3) aus dem Bad ausgebracht ist, und
- Absenken der Behälter (4) zum erneuten vollständigen Eintauchen der darin enthaltenen Früchte oder Gemüse (3) in das Bad.

15. Verfahren nach Anspruch 13 oder 14, worin die Gesamtzeit des vollständigen Eintauchens der Früchte oder Gemüse (3) in die Behandlungszusammensetzung weniger als 10 Minuten beträgt.

16. Verfahren nach einem der Ansprüche 1 bis 13, worin die Behandlungszusammensetzung mit Hilfe eines Verfahrens aufgebracht wird, welches die folgenden Schritte umfasst:
- Einbringen von Behandlungseinrichtungen, welche Früchte oder Gemüse in einem im Wesentlichen kompakten Block enthalten, in einen Bereich, der durch eine Einfassung von seitlichen Wänden im Inneren eines Raumes begrenzt wird, wobei die seitlichen Wände sich in einer Längsrichtung erstrecken, wobei mindestens eine der seitlichen Wände verformbar ist zwischen einer Konfiguration des Festhaltens und einer Konfiguration der Freisetzung des Blocks,
- Überführung der oder jeder seitlichen verformbaren Wand in ihre Konfiguration des Festhaltens des Blocks, und
- longitudinales Verfahren des Bereichs durch eine Behandlungszusammensetzung mit einer Temperatur zwischen 30°C und 60°C mit einem Durchsatz zwischen 20 und 150 m³/m²/h und während einer Zeitdauer zwischen 10 s und 10 min.

17. Kombination, umfassend eine Verbindung, welche die Freisetzung von Phosphitionen H₂PO₃⁻ ermöglicht, und eines Fungizids mit einer Temperatur zwischen 30° und 60°C.

18. Kombination nach Anspruch 17, worin das Fungizid aus Eugenol, Isoeugenol oder einem ihrer Salze, Thiabendazol, Orthophenylphenol, Imazalil oder Imazalilphosphit ausgewählt ist.

19. Kombination nach einem der Ansprüche 17 oder 18, worin die Zusammensetzung, welche die Freisetzung von Phosphitionen H₂PO₃⁻ ermöglicht, und das Fungizid gleichzeitig, getrennt oder zeitlich nacheinander aufgebracht werden.

20. Kit umfassend:
i) eine Einrichtung umfassend:
- Mittel zur Behandlung von Früchten oder Gemüsen in Behältern (4),
- Einrichtungen (16) zur Bildung eines Bades einer Behandlungszusammensetzung (12) mit einer Verbindung, welche die Freisetzung von Phosphitionen H₂PO₃⁻ ermöglicht, mit einer Temperatur zwischen 30° und 60°C nach einem der Ansprüche 1 bis 10 oder 17 bis 19,
- Einrichtungen (18) zum Absenken und Anheben der Behälter (4), und
- eine Steuereinrichtung für die Einrichtungen (18) zum Absenken und Anheben, die einerseits dazu angepasst ist, die Stufen zu steuern, die darin bestehen:
- Absenken der Behälter (4) zum vollständigen Eintauchen der darin enthaltenen Früchte oder Gemüse (3) in das Bad, und
- Abheben der Behälter (4) zum vollständigen Ausbringen der Früchte oder Gemüse (3) aus dem Bad, und andererseits zur Steuerung zwischen diesen beiden Stufen der folgenden Zwischenstufen, die darin bestehen:
- Anheben der Behälter (4), damit mindestens ein Teil der darin enthaltenen Früchte oder Gemüse (3) aus dem Bad ausgebracht ist, und
- Absenken der Behälter (4) zum erneuten vollständigen Eintauchen der darin enthaltenen Früchte oder Gemüse (3) in das Bad, und
ii) eine Behandlungszusammensetzung (12) mit einer Verbindung, welche die Freisetzung von Phosphitionen H₂PO₃⁻ ermöglicht, mit einer Temperatur zwischen 30° und 60°C, wie sie in einem der Ansprüche 1 bis 10 oder 17 bis 19 definiert ist.

21. Kit umfassend:
i) eine Einrichtung umfassend:
- einen Raum umfassend eine Einfassung aus seitlichen Wänden, die sich in einer Längsrichtung erstrecken, wobei die Einfassung im Inneren des Raumes einen Bereich für die Aufnahme von zu behandelnden Früchten oder Gemüsen abgrenzt, wobei mindestens eine der seitlichen Wände zwischen einer Konfiguration des Festhaltens, und einer Konfiguration der Freisetzung einer im Inneren des Bereichs vorliegenden Charge verformbar ist,
- eine Einrichtung zur Versorgung des Raumes mit der Behandlungszusammensetzung und zum Abziehen der Behandlungszusammensetzung aus dem Raum,
- Einrichtungen zum Erhitzen der Behandlungszusammensetzung und
- ein System zur Verformung der verformbaren Wände,
und
ii) eine Behandlungszusammensetzung auf der Grundlage einer Zusammensetzung, welche die Freisetzung von Phosphitionen H₂PO₃⁻ ermöglicht, welche Behandlungszusammensetzung eine Temperatur zwischen 30° und 60°C aufweist, gemäß einem der Ansprüche 1 bis 10 oder 17 bis 20.
